# EUROPEAN PATENT APPLICATION

(11) **EP 4 606 967 A1**
(43) Date of publication of application: **27.08.2025**
(21) Application number: 25159315.8
(22) Date of filing: 21.02.2025
(51) Int. Cl.: E04C 2/06, E04B 5/10, E04B 5/29, E04C 3/07, E04C 3/294, E04C 3/04

(54) **SYSTEM AND METHOD FOR BUILDING A HOUSE**

(30) Priority: 22.02.2024 SE 2450221
(71) Applicant: Nokon Holding AB, 619 71 Vagnhärad (SE)
(72) Inventor: ANDERSSON, Elis, 619 91 TROSA (SE); HÄSTBACKA, Anders, 619 95 VÄSTERLJUNG (SE)
(74) Representative: Noréns Patentbyrå AB

(57) **Abstract**

Building element (101,201,301,401), associated with an installation orientation in which the building element (101,201,301,401) constitutes a part of a floor structure (100), a wall (200,300) or a roof (400) in a building.

The building element (101,201,301,401) comprises
at least one thin sheet metal profile (102,202,302,402) associated witih a longitudinal direction, whereby the thin sheet metaal profile (102,202,302,402) comprises a first flange (105,205,305,405) and a web (104,204,304,404), whereby the first flange (105,205,305,405) is rigidly connected to a first longitudinal edge of the web (104,204,304,404) and runs along the length of the thin sheet metal profile (102,202,302,402);
a cast concrete slab (103,203,303,403) associated with a plane of extension which is parallel to the longitudinal direction of the thin sheet metal profile (102,202,302,402); and
a reinforcement (106,206,306,406), cast into the concrete slab.

A second longitudinal edge of the web (104,204,304,404), opposite to the first longitudinal edge, is cast into the concrete slab (103,203,303,403) along the length of the thin sheet metal profile (102,202,302,402) to achieve composite action between the concrete slab (103,203,303,403) and the thin sheet metal profile (102,202,302,402).

The first flange (105,205,305,405) is arranged completely outside the concrete slab (103,203,303,403).

## Description

The present invention relates to a system for building a house. In general, the system is constructed from one or several part components comprising thin sheet metal profiles in composite action together with high performance concrete. The invention also relates to several such part components themselves, to a method for the manufacture of such part components and to a method for building a house by means of such a system.

Traditionally, apartment buildings in Sweden have been built using concrete. Floor structures are conventionally made of concrete, preferably in the form of flat slabs or hollow slabs, as well as load-bearing walls. The possibilities of using load-bearing structures made from combustible materials were previously limited, for fire reasons, to buildings of no more than two storeys.

Through amended building regulations in 1994 in Sweden, with the Swedish National Board of Housing, Building and Planning's (Boverket) "Building Regulations" BBR 94 coming into force, it is now allowed in Sweden that multi-storey buildings, such as apartment buildings, are also built with load-bearing frames made from of wood as long as the functional requirements regarding e.g. sound environment and fire protection are met. Since this was allowed, the wooden house industry has developed building systems for apartment buildings, among other things. Today, there are several apartment buildings with up to 8 floors built with load-bearing wooden frames. The number of newly produced apartment buildings in Sweden that are built with wooden frames is now estimated at about 15% of the annual apartment production and the trend is increasing.

The wooden building industry has been greatly helped by the environmental advantages of wood compared to concrete. While a concrete house, depending on concrete thicknesses, etc., gives an average climate footprint of about 270 CO₂ per square meter GFA, the corresponding climate footprint for a wooden house is about 110 CO₂ per square meter GFA. Another clear advantage is the significantly lower weight of wooden houses compared to concrete houses. A 250 mm thick concrete floor, which is normally required to meet today's requirements for sound insulation, weighs about 600 kg/m². The floor solutions developed on the wooden house side to meet the corresponding sound requirements normally weigh between 80-100 kg/m². Approximately the same weight ratios apply between load-bearing concrete walls and load-bearing timber stud walls. The above means, among other things, cheaper foundations for wooden residential buildings. Another advantage of the wood building technology is that it is a dry building system. Newly cast concrete with a thickness of 250 mm contains large amounts of moisture that take a long time to dry out, which must be done before, for example, floor coverings and the like can be applied to the concrete surface.

Many new wooden house projects are built with factory-prefabricated modular volumes. Each volume is enclosed by floors, walls and ceilings and involves rational construction where each volume is basically finished with surface layers, installations and more under weather-protected and controlled conditions in the factory. The volumes are then assembled at the construction site side by side and on top of each other to form finished houses.

Building houses in this way implies a significantly more industrialized housing production compared to traditional on-site construction sing concrete. This more industrialized type of production, with the possibility of rationalization and lower costs as a result, together with the great environmental advantages compared to concrete, has probably contributed strongly to the increased success of multi-storey residential buildings with wooden frames.

An advantage of housing production based on modular volumes is the potentially high degree of prefabrication with a very large part of the production located in the factory. However, this requires large investments in advanced production facilities. A disadvantage is that the size of each volume is limited for transport reasons. The largest possible floor plan dimensions for a volume are a width and length of the order of 3.5 x 9.0 meters. In the case of smaller apartments, such as student apartments, an apartment normally consists of a single volume. In the case of larger apartments, several volumes are put together with doorways and the like between the individual volumes. Sometimes there are difficulties in adapting the volumes to the current floor plans for the apartments. In order to make optimal use of the volume building technology, the floor plans of the apartments should be designed from the beginning so that they are adapted to the conditions for volume production rather than the other way around. Another disadvantage is transport, as large volumes of air are transported.

Wooden building systems have also been developed for apartment buildings based on flat elements instead of on assembled volumes. Prefabricated floor elements and wall elements in the form of "flat packages" are delivered to the construction site and assembled into the finished house. This of course means that the pre-production rate is lower, resulting in more work on the construction site compared to the modular volume production. On the other hand, this means that the investment required in production is reduced. Furthermore, transport is facilitated, with lower transport costs as a result. The system also provides greater flexibility in terms of the apartments' floor plans and allows for larger and freer spans.

As for the requirements for sound insulation between different apartments, this is met in the case of concrete buildings simply through the weight/density of the concrete. In the volume production of wooden buildings, the sound requirements must instead be met by the structures of the different volumes being physically separated from each other by an air gap of normally 20-30 mm, so that continuous structures between different apartments are avoided. The total floor structure between two apartments then consists of the lower volume's roof and the upper volume's floors, separated from each other by the aforementioned air gap. The same applies to the walls separating the apartments; two volumes placed next to each other are separated by a vertical air gap.

In systems based on flat elements, the sound requirements on the floor structure are usually solved by a suspended ceiling made up of a number of plasterboards and insulation, which is suspended in the floor structure to reduce sound transmission.

Sound measurements in finished projects show that it is quite possible to achieve very good sound insulation even in lighter wooden structures. However, great demands are placed on detailed solutions at different supports and, for example, at floor-to-wall connections, so that various flank transmission problems do not destroy the sound insulation. In concrete constructions, wherein the sound requirements are simply met by the weight/density of the concrete, it is more difficult to fail.

In the comparison above between a 250 mm thick concrete floor structure and a light floor structure, it was stated that the concrete floor structure weighed about 600 kg/m² while the light floor structure weighed no more than about 100 kg/m². On the other hand, the lighter wooden beams are significantly thicker in both volume module production and systems with planar elements, usually between 450 and 500 mm. The walls separating apartments are also thicker in the wood construction technique, or normally about 300 mm compared to 200-250 mm for concrete buildings. These increased thicknesses increase the building's total volume, with an increased façade area and façade costs as a result.

As pointed out above, load-bearing timber frames in Sweden could only be used for buildings with a maximum of two storeys before the national regulation BBR 94 came into force. A distinction was then made between non-combustible structures and fire safety classes A 30, A60 etc., and combustible structures and fire safety classes B 30, B 60 etc. As BBR 94 replaced the national building regulations in force at the time, the Swedish authorities wanted to make the provisions material-neutral and no longer distinguish between non-combustible (named "A") and combustible (named "B") materials. Instead, functional requirements were used to expressed the differences. At that time, the European Committee for Standardization (CEN) classification designations El 30, El 60 etc. were introduced for fire separation structures, and R 30, R 60 etc. for load-bearing capacity in the event of fire. This means that the structure in question must fulfil its fire-separating and load-bearing functions during the prescribed time, such as 60 minutes when the structure is exposed to a thermal impact equivalent to a standard fire according to ISO 834.

For separating structures (EI), this means that the structure must withstand the fire on the other side and, in addition, the temperature increase on the non-fire-exposed side must not exceed 140°C on average after the prescribed time. At higher temperatures, there is a risk of radiation ignition of flammable material on the other side of the separating structure, even if the structure is otherwise intact. For load-bearing structures, the load-bearing capacity (R) after the prescribed time must exceed the current load in the event of a fire.

For example, for a non-combustible load-bearing concrete or steel structure, the temperature of the structure must be limited in the event of a fire, as the strength decreases with increasing temperature. For a load-bearing combustible wooden structure, the so-called effective residual cross-section after charring of the wooden structure must be large enough to be able to support the relevant loads in the event of a fire.

Despite the ambition of material neutrality, there is a significant difference between combustible and non-combustible load-bearing structures. In a building with a load-bearing concrete or steel frame, not much happens in terms of strength after all the fire load in the form of furniture and furnishings has burned up or after the fire has been extinguished. Concrete and steel basically regain their original strength after cooling. On the other hand, in the case of a wooden frame that has started to char during the fire, the charring continues after the fire load has burned up or the fire has been extinguished. There is thus a risk of a hard-to-detect and difficult-to-extinguish glowing smouldering fire inside the structures, not least in all the air gaps that exist for sound reasons. The glowing smouldering fires mean that there may be a risk of collapse, not after the prescribed time (for example, 60 or 90 minutes) but perhaps after a few hours or more. It should be emphasised that charring of a load-bearing wooden structure in the event of a fire normally begins before the prescribed time is reached. This is also the case for a construction that meets current requirements without penetrations or any defects in the workmanship. In other words, this means that there is always an expected risk of hidden smouldering fires in buildings with a wooden frame, even if the structures meet the applicable norm requirements. A number of fires that have occurred in newly built apartment buildings with wooden frames testify to this.

The above can thus be said to be a consequence of the Swedish ambition in 1994 to make the rules material-neutral, in other words to no longer distinguish between combustible and non-combustible materials, but to require other compensatory measures. Compared with, for example, Denmark, which has also introduced the above-described European classification, load-bearing combustible structures are not allowed there without compensatory measures. For buildings with more than two storeys, it is required that the load-bearing structures are either non-combustible, or if they are combustible, that they must be protected with a cladding in fire safety class K2/60. This means that a combustible structure must be protected against ignition for at least 60 minutes. The aim is to prevent the frame from starting to char in the event of a real fire and thus prevent smouldering fires from occurring inside the structure. Similar requirements also exist in Norway and Germany, among other countries.

In light of a number of fires that have occurred in new apartment buildings with wooden frames, which have posed major challenges for the rescue services to locate and extinguish smouldering fires, and due to the fact that several insurance companies have begun to question multi-storey residential buildings with wooden frames, stricter fire safety requirements similar to those in Denmark, Norway and Germany will soon be introduced in Sweden as well. A proposal for new building regulations called " Möjligheternas Byggregler " is now out for consultation from the Swedish National Board of Housing, Building and Planning. The proposal means, among other things, that a load-bearing wooden structure in a multi-storey building should not be allowed to start charring at all in the event of a fire. This will mean increased costs for the construction of wooden houses in the form of, for example, an increased number of plasterboards as fire protection for the wooden frame.

The insurance companies also estimate that the damage cost for a fire in a house with a wooden frame is significantly higher compared to a fire in a house with a concrete or steel frame. This is because the smouldering fires can result in large parts, or all, of a building has to be demolished as the smouldering fires, even after they have been extinguished, have caused permanent reduction in the load-bearing capacity of the structures. The risk of mould growth on the wooden structures due to extinguishing water penetrating into cavities and between module joints is also pointed out by the insurance companies as a risk even for structures that have not been charred by the fire.

In recent years, wooden studs in some constructions have been replaced with non-combustible sheet metal studs of steel. This applies in particular to wall studs in internal non-load-bearing lightweight walls with plasterboard. Recently, wooden studs in exterior walls have also been replaced to some extent with sheet metal studs. This is to reduce the risk of moisture problems and mould growth on wooden studs in the façade. The significantly larger thermal conductivity of steel, which is a disadvantage in heat-insulating exterior walls, has been solved by the fact that the web of the exterior wall studs is very thin, or of the order of a few millimetres, and that the webs have also been provided with slotted holes with reduced thermal bridges as a result. However, the thinness and slitting of the webs mean that the outer wall joists normally have a very limited load-bearing capacity.

Apart from the above examples, it is very rare for wooden beams in floors, ceilings and load-bearing walls to be replaced with thin sheet metal profiles made of steel. There are a large number of companies in Sweden that manufacture various building elements such as floor elements, roof elements, wall elements and more, with wooden frames for various construction projects, while similar production of elements with non-combustible sheet metal profiles hardly occurs at all. This is despite the fact that this could have many advantages as shown below.

The present invention solves the above-mentioned fire problem with wooden structures while maintaining the advantages of low weight compared to a conventional concrete house. The system also has advantages in terms of environmental impact. Above, the climate footprint of an apartment building with a concrete frame was stated to correspond to an average value of 270 CO₂ per square metre GFA, and for multi-dwelling buildings with a wooden frame value of 110 CO₂ per square metre GFA. Regarding the present invention, a climate footprint of about 140 CO₂ per square meter GFA has been calculated, i.e. slightly higher than for wooden houses. However, according to today's rules for climate calculations, the transports from the manufacturing site to the construction site are in all cases calculated with one and the same standard value. In the future, these transports will be calculated with their real carbon footprint, which will be to the advantage of the system according to the invention due to its lightness compared to concrete houses and the fact that large volumes of air do not have to be transported as in the case of the wooden module volume houses. This means that the climate footprint of the present system will most likely be as low as, or perhaps even lower than, that of wooden houses.

Hence, the invention relates to a building element, associated with an installation orientation in which the building element constitutes a part of a floor structure or a roof in a building, whereby the building element comprises at least one thin sheet metal profile having a length direction, whereby the thin sheet metal profile comprises a first flange and a web, whereby the first flange is rigidly connected to a first longitudinal edge of the web and runs along the length of the thin sheet metal profile; a cast concrete slab having a plane of extension which is parallel to the length direction of the thin sheet metal profile; and a reinforcement, cast into the concrete slab, whereby a second longitudinal edge of the web, being opposite to the first longitudinal edge, is cast into the concrete slab along the length of the thin sheet metal profile to achieve a composite action between the concrete slab and the thin sheet metal profile, and whereby the first flange is completely arranged outside of the concrete slab.

In some embodiments, the concrete slab has a thickness, perpendicularly to said plane of extension, of at the most 40 mm.

In some embodiments, the concrete slab is manufactured from high performance concrete.

In some embodiments, the thin sheet metal profile has a material thickness of at the most 3.0 mm.

In some embodiments, the thin sheet metal profile further comprises a second flange.

In some embodiments, the second flange is rigidly connected to an upper edge of the web and runs along at least 80%, such as at least 90%, of the length of the thin sheet metal profile.

In some embodiments, the second flange is cast into the concrete slab.

In some embodiments, the composite action between the thin sheet metal profile and the concrete slab is achieved by the second flange being secured to the reinforcement via a connection being contained inside the concrete slab.

In some embodiments, the surface area relations between the concrete slab and the thin sheet metal profile are such so that a part of the cross-section of the thin sheet metal profile constituting at least 90% of the thin sheet metal profile as counted from the first flange in a direction towards the second flange is subjected to tensile stress when the building element is loaded in a direction perpendicularly to the plane of extension of the concrete slab in a direction from the second flange towards the first flange.

In some embodiments, the thin sheet metal profile has a C profile.

In some embodiments, the building element comprises several parallel and separate thin sheet metal profiles, in composite action with one and the same concrete slab.

In some embodiments, the building element comprises two thin sheet metal profiles arranged in direct connection to each other so that a respective external surface of their respective web abuts directly against each other.

In some embodiments, the building element comprises a thin sheet metal profile arranged at and along an edge of the concrete slab, the thin sheet metal profile having said external surface of its web exposed so that it can abut directly against a corresponding this sheet metal profile of an adjacent building element.

In some embodiments, the web comprises heat conduction-decreasing slits.

In some embodiments, the building element is a floor structure element or a roof element, whereby the length direction of the thin sheet metal profile has a non-zero horizontal component in said installation orientation, and whereby the second flange is arranged under the concrete slab in said installation orientation.

In some embodiments, the building element is a roof element, whereby the roof element has a non-combustible stone wool board as a substrate for a roof covering, the stone wool board being cast-in at the factory at a side of the concrete slab facing away from the thin sheet metal profile.

In some embodiments, the building element is a wall element in which the thins sheet metal profile is arranged with its length direction oriented vertically in said installation orientation, whereby said thin sheet metal profile is filled with reinforced concrete.

In some embodiments, the building element is a wall element comprising another thin sheet metal profile, arranged with its length direction oriented vertically in said installation orientation, whereby said other thin sheet metal profile is in composite action with the above mentioned thin sheet metal profile and is filled with reinforced concrete.

In some embodiments, said other thin sheet metal profile has a cross-section which is smaller than the above-mentioned thin sheet metal profile.

In some embodiments, the building element comprises non-load bearing thin sheet metal material profiles having a Z-shape, fastened to the other thin sheet metal profiles and forming a distance element between the other thin sheet metal profiles and a sheet material that can be mounted on the thin sheet metal profiles at a horizontal distance from the thin sheet metal profiles in said installation orientation.

Moreover, the invention relates to a structural part of a building, whereby the structural part comprises several building parts of the above mentioned type, installed side by side and side edge to side edge to form the structural part. The structural part can be a floor structure an interior wall, an exterior wall or a roof part, such as an exterior roof.

Moreover, the invention relates to a building, whereby the building comprises a structural part according to the above.

Moreover, the invention relates to a method for manufacturing a building element according to the above, the method comprising the steps
providing at least one thin sheet metal profile having a longitudinal direction, whereby the thin sheet metal profile comprises a first flange and a web, whereby the first flange is rigidly connected to a first longitudinal edge of the web and runs along the length of the thin sheet metal profile;
providing a reinforcement; and
cast a concrete slab, having a plane of extension which is parallel to the length direction of the thin sheet metal profile, whereby
the reinforcement is cast into the concrete slab,
a second, longitudinal edge being opposite to the first longitudinal edge, of the web is also cast into the concrete slab along the length of the thin sheet metal profile to achieve composite action between the concrete slab and the thin sheet metal profile, and
the first flange is not cast into the concrete slab but is arranged outside of the concrete slab.

In some embodiments, the method further comprises the step to rigidly connect the thin sheet metal profile to the reinforcement before the casting.

In some embodiments, the method takes place at a geographic distance from a location for the installation of the building element as a part of a building.

Moreover, the invention relates to a method for manufacturing a structural part according to the above, whereby the method comprises the steps
providing several building elements according to the above;
constructing the structural part by installing said several building elements next to each other to form part of the structural part; and
as a respective part of the structural part, apply one or more of
insulation;
fixtures for electricity, water, sewer, ventilation and/or communications;
sheet materials, such as plasterboards; and
surface-covering material.

In some embodiments, the structural part is a floor structure, whereby the method further comprises the step of installing a ceiling beneath the floor structure, comprising spring-loaded suspended plasterboards.

In some embodiments, the method takes place on-site and in connection with the building of a building in which the structural part is a part.

In the following, the invention will be described in detail, with reference to exemplary embodiments of the invention and to the enclosed drawings, wherein:
Figure 1a is a plan view from above of a floor structure element (a floor part);
Figure 1b is a section view A-A from the side of the floor structure element as shown in Figure 1a;
Figure 1c is a detail view B from the side of the floor structure element shown in Figure 1a;
Figure 1d is a side view of several floor structure elements as shown in Figure 1a that are joined together in a floor structure;
Figure 2a shows the stress distribution over a loaded thin sheet metal cross-section without composite action with a floor board arranged above the thin sheet metal;
Figure 2b shows the used load distribution over the thin sheet metal cross-section in Figure 2a;
Figure 3a shows the stress distribution over the same loaded this sheet metal cross-section in a composite action between the thin sheet metal cross-section with a concrete floor slab arranged above the thin sheet metal;
Figure 3b shows the used load distribution over the thin sheet metal cross-section in Figure 3a;
Figure 4 shows theoretically calculated load deformation relationships for a thin sheet metal profile without or with, respectively, a composite action with a concrete slab, where the thin sheet metal profile has a wall thickness of 1.2 mm;
Figure 5 shows theoretically calculated load deformation relationships for a thin sheet metal profile without or with, respectively, a composite action with a concrete slab, where the thin sheet metal profile has a wall thickness of 2.0 mm;
Figure 6 shows a horizontal section of an interior wall element;
Figure 7 shows how a load is applied to a wall from a floor structure element arranged above the wall;
Figure 8a shows, from two sides angled 90° relative to each other, how a conventional thin sheet metal profile exposed to a compressive load tends to dent;
Figure 8b shows the same profile as in Figure 8a, but in horizontal cross-section, a load-bearing thin sheet metal profile that is concrete-filled;
Figure 9 shows a horizontal section of an exterior wall element;
Figure 10a shows a roof element in a cross-section parallel to an exterior roof in which the roof element is included;
Figure 10b shows an exterior roof structure in a vertical cross-section;
Figure 10c shows an exterior roof construction in a perspective view;
Figure 11 is a flowchart showing a first method; and
Figure 12 is a flowchart showing a second method.

In all figures, the last two digits of three-digit reference numerals indicate the same or corresponding parts.

The present invention relates to a light construction system for mainly apartment buildings consisting of flat/planar elements in the form of floor structures, load-bearing interior walls, load-bearing exterior walls and load-bearing roofs constructed entirely of non-combustible components. All the planar elements as above consist of load-bearing sheet steel profiles in composite action with a very thin concrete slab of high-performance concrete. The thickness of the concrete slab is of the order of 25 mm, compared to a thickness of about 250 mm for conventional floor structures and load-bearing concrete walls for apartment buildings. The weight of the floor structure is thus comparable to that of a wooden floor structure or of the order of 100 kg/m² compared to the concrete building's floor weight of the order of 600 kg/m². The thin concrete slab also means that there are no drying problems, which according to the above exists in conventional concrete structures. The thin concrete slab achieves standard strength within 12-15 hours and is dried out within a few days.

Additional advantages of the invention are that the floor structure allows for larger spans and a lower total floor height compared to wooden floor structures. This is illustrated below by comparing the stiffness of a load-bearing wooden beam to the corresponding load-bearing sheet metal profile of steel. A frequently used estimation formula as a measure of the required stiffness to avoid annoying deflections or natural oscillations for light floor structures is that the deflection of the beam for a point load of 1 kN (100kg) should be limited to 1.5 mm.

Wooden beam: The normal beam dimension in floor structures is 45 x 220 mm. With a span of 3.0 m, theoretical deflection is 1.3 mm for a point load of 1 kN at the centre of the beam.

Thin sheet beam: A C-profile with a height of 220 mm and a wall thickness of 3 mm is selected for comparison. With a span of 5.0 m, theoretical deflection is 1.2 mm for a point load of 1 kN at the centre of the beam.

The present building system of flat elements for multi-dwelling buildings consisting of load-bearing sheet profiles in composite action with a thin concrete slab of high-performance concrete may include one or more of the following types of part components:
- Load-bearing apartment separating floor structure elements
- Load-bearing apartment separating wall elements
- Load-bearing exterior wall elements
- Load-bearing roof elements

These different types of part components of such a system are described in more detail separately below.

### Part component 1: Load-bearing apartment separating floor structure element

A part component of the present system consists of an apartment separating floor structure. High demands are placed on floors in apartment building regarding sound insulation both in the form of air sound insulation and insulation against impact sounds. Such floor structures also have requirements for fire resistance corresponding to fire safety class REI 60 or REI 90 (above), depending on the number of floors of the building.

Light floor structures can be made of sheet metal profiles, such as C-sections, instead of wooden beams. The actual floor that spans between the sheet metal profiles, whose centre distance is normally 600 mm, can then include, for example, a 22 mm thick floor chipboard with floor-mounted plasterboard to live up to current fire and sound requirements. Again, combustible components in the form of the floor chipboard that can cause smouldering fires inside the floor structure are then included. Another option is to use a trapezoidal profiled sheet that carries across the thin sheet profiles instead of floor chipboarding. On top of the trapezoidal profiled sheet, floor plasterboard can then be mounted, again to live up to current fire and sound requirements. In this alternative, the risk of smouldering fires is avoided, but neither at the chipboard floor nor at the trapezoidal profiled sheet there is any composite action between the floor board and the sheet metal profiles. The composite action between the thin floor board of high-performance concrete and the sheet metal profiles achieved in the present invention results in that a number of strength problems that are otherwise associated with load-bearing sheet steel profiles are eliminated. At the same time, the required dimensions of the thin sheet metal profiles are greatly reduced or, conversely, the load-bearing capacity and stiffness of a given thin sheet metal dimension is greatly increased by the composite action between the thin sheet metal profiles and the thin concrete slab according to the invention.

A load-bearing floor structure 100 may include one or more load-bearing floor structure elements 101 according to a type described below. More specifically, such a floor structure element may include an upper load-bearing floor part in the form of a thin concrete slab 103 of high-performance concrete in composite action with one or more thin sheet metal profiles 102. It may also include a non-load-bearing part 109, being elastically and resiliently suspended in the floor part, the part 109 being insulating with respect to fire and sound.

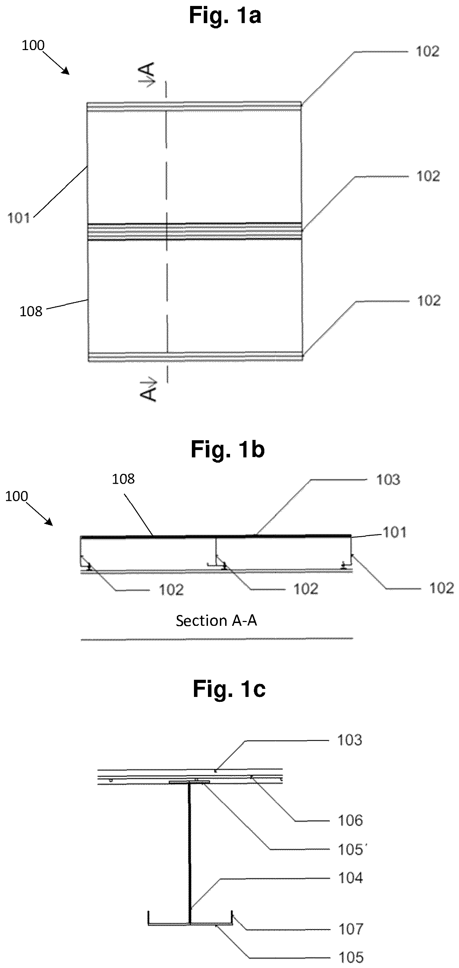

Figures 1a-1d show how the upper part of the floor structure element 101 is made up of one or more longitudinal load-bearing sheet profiles 102, preferably of a C-shape, with a web 104, a lower flange 105 and an upper flange 105'. The web 104 can be vertical. The lower flange 105 and/or the upper flange 105' can be horizontal. Each of the lower flange 105 and the upper flange 105' lower flange runs along the length of the thin sheet metal profile 102, such as at along least 80%, such as along at least 90%, of the entire length of the thin sheet metal profile 102, and is rigidly connected to the web 104 along the entire length of this section. In preferred embodiments, the web 104, the upper flange 105' and the lower flange 105 are parts of one and the same connected material body, preferably made of a metal material, such as steel. The upper flange 105' is cast, such as completely cast-in and completely enclosed by concrete, into a thin concrete slab 103 of high-performance concrete that serves as a floor or subfloor. As used herein, 'high-performance concrete' may refer to a concrete which, when hardened, has a compressive strength of at least 80 Mpa. For example, the concrete may have a VCT number of at least 0.25, such as about 0.28. The concrete may be mixed with residual material, such as blast furnace slag, chromium slag and/or silica.

The casting in can be arranged to run along the full length of the thin sheet metal profile 102 and/or along the full length of the concrete slab 103 in the longitudinal direction of the thin sheet metal profile 102 and along the thin sheet metal profile 102. In general, the web 104 can be perpendicular, or at least perpendicular ±10°, to a plane of extension of the concrete slab 103. The floor structure element 101 can have different widths, such as at least 50 cm, such as at least 100 cm, such as at least 200 cm; and/or 1000 cm or less, such as 500 cm or less, such as 300 cm or less; for example, 2.4 m by default. The length of the floor structure element 101, or its span, can be adapted to the current floor plans and the position of load-bearing walls, and can be at least 200 cm, such as at least 240 cm; and/or 1000 cm or less, such as 500 cm or less. The height of the thin sheet metal profiles 102, which in some embodiments is the same as a height of the web 104, may be at least 50 mm, such as at least 70 mm, such as at least 200 mm; and/or 500 mm or less; such as 400 mm or less; for example, 250 mm as standard. The wall thickness of each of the web 104 of the thin sheet metal profile 102, the upper flange 105' of the thin sheet metal profile 102 and the bottom flange 105 of the thin sheet metal profile 102 can be at least 1.0 mm, such as at least 1.5mm; and/or 5.0 mm or less, such as 4.0 mm or less, such as 3.0 mm or less. These wall thicknesses are selected depending on the current loads and spans. In some embodiments, the web 104 of the thin sheet metal profile 102, the upper flange 105' of the thin sheet metal profile 102 and the lower flange 105 of the thin sheet metal profile 102 all have the same wall thickness. The concrete slab 103 can have a thickness of at least 20 mm, such as at least 25 mm; and/or 50 mm or less, such as 40 mm or less. For both the upper flange 105' and the lower flange 105', independently, their width may be at least 10 mm, such as at least 20 mm wide; and/or 200 mm or less, such as 100 mm or less. These dimensions apply in particular to a sheet metal profile being a simple C-profile.

The floor structure element 101 can be rectangular when viewed from above, and the concrete slab 103 can follow the shape of the floor structure element 101 in the same view. The concrete slab 103 can be in the form of a connected piece of cast concrete that covers this entire shape.

The upper flange 105' can be anchored, for example by welding, to a reinforcement mesh 106 embedded in the concrete slab 103 (such as completely cast-in and completely encapsulated by concrete), guaranteeing the composite action between the thin sheet metal profiles 102 and the concrete slab 103. The reinforcement mesh 106 can be horizontally arranged and be arranged to connect to (be in composite action with, via the concrete) the thin sheet metal profile 102 in question along the length of the thin sheet metal profile 102, such as along at least 80%, such as along at least 90%, of the length of the thin sheet metal profile 102. One and the same reinforcement mesh 106 can connect to at least two, such as all, of the thin sheet metal profiles 102 in the concrete slab 103 and thus interconnect such thin sheet metal profiles 102. One, or more interoperating, reinforcement mesh 106 may in certain embodiments be arranged to cover, individually or together, and to at least 80%, or to at least 90%, a horizontal cross-section of the concrete slab 103. It is realized that in some embodiments, the reinforcement mesh 106 can be replaced with another type of reinforcement, such as a mesh-shaped rebar, fibre reinforcement (such as basalt fibre reinforcement), and so on. It is preferable that the reinforcement consists of a rigid part covering the greater part, such as essentially the whole, of the main extension plane of the concrete slab 103, and wherein the reinforcement is firmly and rigidly connected, such as by welding, to the thin sheet metal profiles 102.

The lower flange 105 of the thin sheet metal profiles 102 can have a reinforcing lip 107 or flange, running along the entire length of the lower flange 105 and configured to counter local buckling when the thin sheet metal profile 102 is subjected to compressive force. However, the upper flange 105' may in certain embodiments (and as shown in Figure 1c) lack such corresponding stiffening lip or flange, in order to avoid that a lip on the upper flange 105' complicates and splits the casting of the very thin concrete slab 103 and since the required stiffening against local buckling of the upper flange 105' is still effectively achieved by the embedding of the upper flange 105' in the concrete slab 103. In fact, the upper flange 105' can be terminated in a simple edge facing outwards from the web 104, without any kind of flange in any direction along such an edge. Such a solution, without an upper lip of the profile, also means a cheaper solution in terms of material cost, because the thin sheet metal profiles 102 can then be rolled from a narrower belt than would be the case with a corresponding profile dimension fitted with a termination flange along the upper flange 105'.

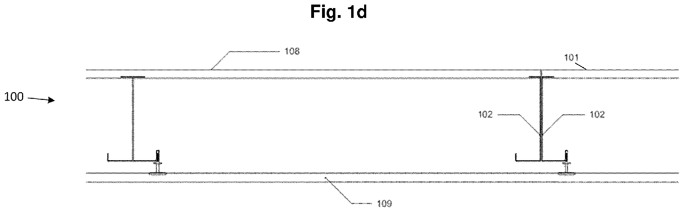

The floor structure element 101 may include at least one, such as at least two, such as at least three, such as at least four, thin sheet metal profiles 102; and/or ten or fewer, such as eight or fewer, such as six or fewer, thin sheet metal profiles 102. In some embodiments, the floor structure element 101 may include a respective thin sheet metal profile 102 along each side of the floor structure element 101. Such thin sheet metal profiles 102, arranged along the edge of the floor structure element 101, can be exposed when viewed from the side along the edge of the floor structure element 101 and thus not be covered by concrete when viewed from the side of the floor structure element 101. Otherwise, the thin sheet metal profiles 102 can be equidistantly distributed over the concrete slab 103 as seen in a direction across the longitudinal direction of the thin sheet metal profiles 102. This means, in the exemplary case of four thin sheet metal profiles 102, that the floor structure element 101 comprises two thin sheet metal profiles 102 distributed in relation to the middle of the floor structure element 101 and one thin sheet metal profile 102 along each outer edge. The thin sheet metal profiles 102 can run in parallel to each other in the floor structure element 101. In some embodiments, there are less than two thin sheet metal profiles 102 per metre of concrete slab 103 in a direction perpendicular to the longitudinal direction of the thin sheet metal profiles 102 and/or each pair of thin sheet metal profiles 102 is separated by at least 15 cm, such as at least 100 cm, in the same perpendicular direction. In this respect, a pair of composite C-profiles are counted as one and the same "thin sheet metal profile" (see below and Figure 1d).

In some embodiments, all thin sheet metal profiles 102 in the floor structure element 101 can have the same dimensions and wall thicknesses. Furthermore, all thin sheet metal profiles 102 for the same floor structure, with a given span, can have the same dimensions and wall thicknesses, which means that they always have the same load and stress. This is because they in the finished building elements 101 and 108 (see Figure 1d) are assembled adjacent to each other so that there will always be pairs of thin sheet metal profiles 102 of the same dimension, except possibly at the ends of the floor structure 100 and at holes in the floor structure 100. Despite its thinness, e.g. of 25 mm, the concrete slab 103 can be supported at a centre-centre distance between the thin sheet metal profiles 102 of 600 mm, or even 1200 mm. This can be compared to the required 600 mm for a 22 mm chipboard floor. Again, a pair of composite C-profiles are counted as one and the same "thin sheet metal profile".

It is thus realized that each floor structure element 101 can contain several thin sheet metal profiles 102, that in turn can be of C-profile. The thin sheet metal profiles 102 arranged along the edges of the floor structure element 101 can be oriented so that they align with the back of the C-shape against the corresponding C-shaped thin sheet metal profile 102 in an adjacent floor structure element 108 to together form the shape of a horizontal "H". Correspondingly, each of any thin sheet metal profiles 102 that are not arranged along an edge of the floor structure element 101 may include two C-profiles, arranged back to back to form a horizontal "H". In some embodiments, all C-shaped thin sheet metal profiles 102 in one and the same floor structure element 1 are identical.

Then, on the construction site a plasterboard 109 ceiling can be mounted to the top of the floor structure element 101 via a suitable spring-loaded suspension in order to meet the current sound insulation requirements and to protect the load-bearing thin sheet profiles 102 against excessive temperatures in the event of a fire from below. The above means that transport damages of finished building elements 101 containing plasterboards, otherwise being common, are avoided while the space above the suspended ceiling can easily be used on the construction site for various installations before the suspended ceiling is installed.

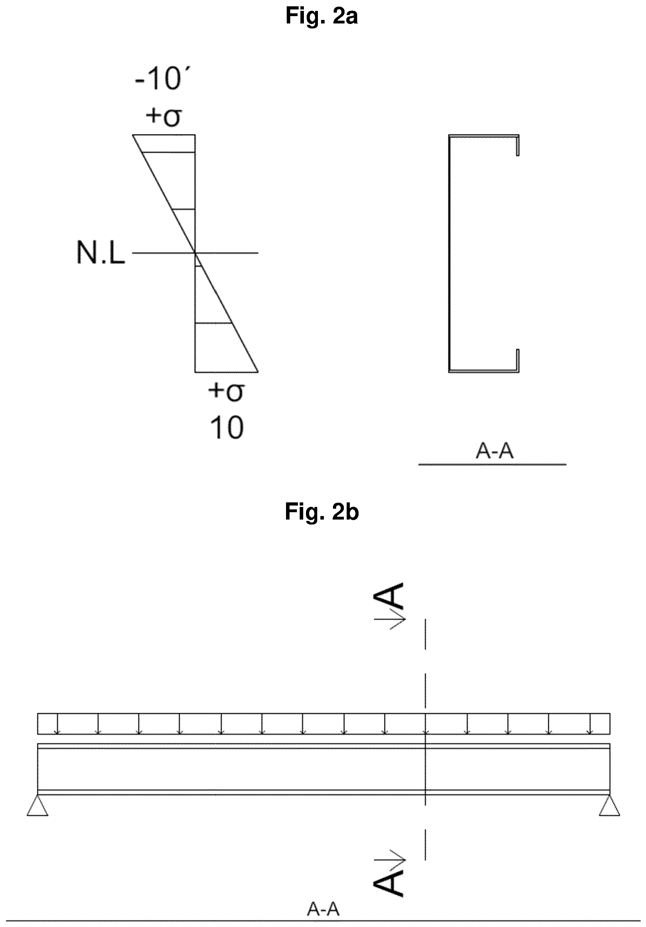

Figures 2a and 2b show how the stress distribution over a thin sheet metal profile having a C-shape without composite action looks like when loaded from above. In the lower part there are tensile stresses 10 while in the upper part there are compressive stresses 10'. The neutral layer (N.L.) ends up in the middle of the profile height. The compressive stresses entail a risk of local bucking of the thin profile parts, which means that the permissible compressive stresses and thus the bearing capacity of the profile are reduced. Within tensile parts of the profile cross-section, however, there is no risk of corresponding local buckling. The risk of local buckling within loaded cross-sectional parts also means that the fire resistance of the thin sheet metal profiles is greatly reduced. When heated in connection with a fire, the strength of steel is generally reduced with increased temperature. In the case of a traditional steel cross-section in the form of, for example, hot-rolled I- or H-profiles with wall thicknesses of 10 mm or more, this can be taken into account in terms of calculations, and depending on the load utilisation in the event of a fire, steel temperatures of around 600°C can usually be allowed. Due to the complex buckling phenomena of the loaded parts of the thin sheet metal profiles, such problems being accentuated by the heating from the fire, only a steel temperature of no more than 300°C is normally allowed. This means that a thin sheet metal profile must be protected against fire with, for example, significantly more and more expensive plasterboard than is the case with a traditional hot-rolled steel profile.

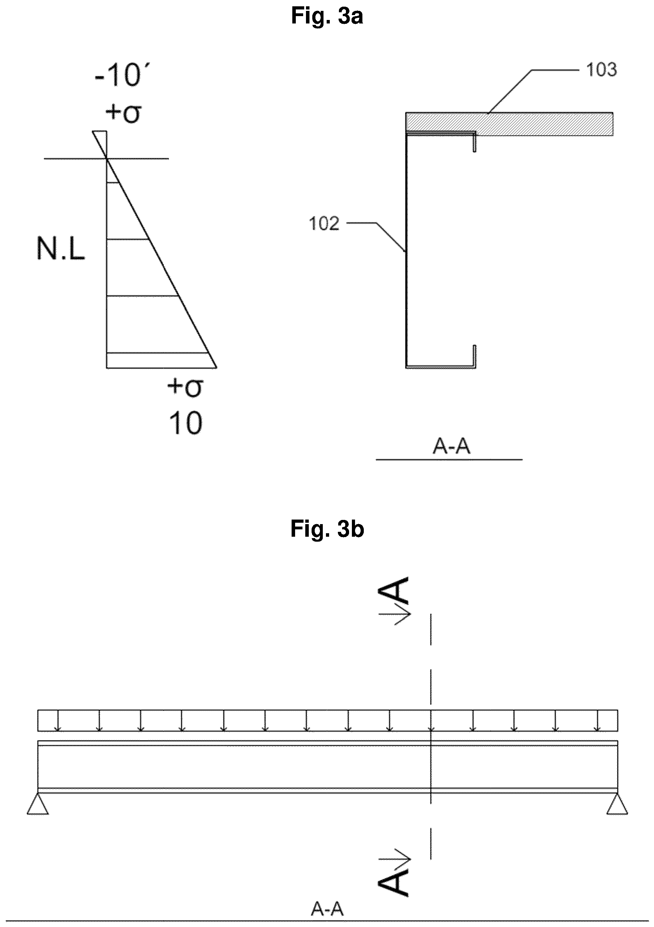

Figures 3a and 3b instead show how the composite action between the sheet metal profiles 102 and the thin concrete slab 103 achieved by the present invention causes the neutral layer to be moved up to basically the underside of the concrete slab 103 and how thereby the entire, or almost the entire, of the cross-section of the sheet metal profile 102 experiences tensile stress 10. Any small compressive stresses 10' that may remain at the top of the thin sheet metal profile 102 are so small that no local bucking occurs. Any reduction of permitted load is therefore also not relevant. At the same time, the composite action in itself means that the cross-section shows a significantly greater bending resistance and torque capacity than the thin sheet metal profile 102 alone. Since no compressive stresses sensitive to local buckling are achieved using the present solution, it is not necessary to take into account fire contexts, but instead equally high critical steel temperatures, such as 600°C, that can apply to conventional hot-rolled steel profiles with coarser wall thicknesses, can be applied. This avoids the above-mentioned increase in the cost of fire protection that otherwise affects thin sheet metal profiles.

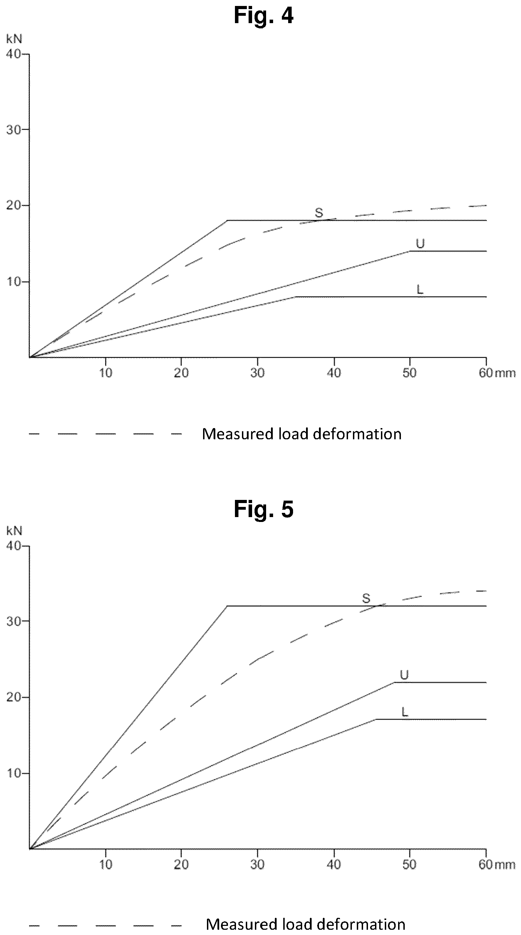

In Figure 4, the solid curves show theoretically calculated load deformation relationships corresponding to two thin sheet metal profiles 102 with a height of 250 mm and a material wall thickness of 1.2 mm. Curve S corresponds to the composite action with a 1.2 m wide and 25 mm thick concrete slab according to the solution described above. Curve U shows the corresponding only for thin sheet metal profiles 102, but without taking into account the local buckling of loaded parts. Curve L is the corresponding, but taking into account the reduction of compressive stresses due to local buckling. The dotted curve shows actually measured load deformation, in composite action according to the invention for a floor structure element containing two parallel thin sheet metal profiles with a height of 250 mm each and a material wall thickness of 1.2 mm, which interact in composite action with a 1.2 m wide and 25 mm thick concrete slab of high-performance concrete.

Figure 5 shows the same material, but with the difference that the material wall thickness of the thin sheet metal profiles 102 is 2.0 mm instead of 1.2 mm. The dotted curve again shows the actually measured load deformation, in composite action according to the invention but with a material wall thickness of 2.0 mm instead of 1.2 mm.

Practical measurements have shown that a solution as described above results in at least twice as rigid and strong a floor structure element 101 than in conventional corresponding floor structures with load-bearing thin sheet metal profiles. Or, conversely, in order to meet the requirements for load-bearing capacity and rigidity, the dimensions of the load-bearing thin sheet metal profiles 102 can be greatly reduced by such a solution.

### Load-bearing apartment separating interior wall elements

One part component of the present system consists of a load-bearing interior wall 201. Such an interior wall 201 may include one or more load-bearing interior wall elements 201 of a type that will now be described. More specifically, such an interior wall element 201 may consist of a load-bearing thin wall panel 203 of high-performance concrete in composite action with one or more load-bearing sheet profiles 202, and a wall board of plasterboard 213 mounted on non-load-bearing thin sheet metal beams 214. The interior wall 201 can be an apartment-separating interior wall 201.

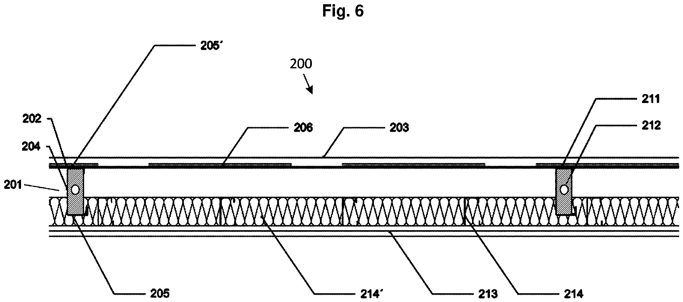

Figure 6 thus shows how such a wall element 201 is constructed with, on the first side of the wall element 201, a thin load-bearing concrete slab 203 of high-performance concrete, wherein load-bearing sheet studs 202 have a first part 205' cast-in and anchored, preferably by welding, to a reinforcement mesh 206 embedded in the wall panel 203. Both the first part 205' and the reinforcement mesh 206 can be completely embedded in, and completely encapsulated by, the concrete that forms the wall panel 203.

A second part 205 of the thin sheet metal stud, opposite to the first part 205' in a direction perpendicular to the wall panel 203, is preferably not cast-in in the concrete of the wall panel 203.

The thin sheet metal profiles 202 can have a closed cross-section, but in some embodiments they have a C-profile. In the case of C-profile, the first part 205' consists of a flange corresponding to the flange 105' described above; the second part 205 corresponds to a flange corresponding to the flange 105 described above; and a web 204 corresponds to the web 104 described above.

What has been said above regarding the concrete slab 103, the thin sheet metal profiles 102 and the reinforcement mesh 106 in the floor structure element 101, and how these parts relate to each other and to the floor structure 100 in general, can generally be applied in the same way to the corresponding concrete slab 203, thin sheet metal profiles 202 and reinforcement mesh 206 in the wall element 201 and the wall 200 in general, however, with the understanding that the wall element 201 is of course vertically arranged while the floor structure element 101 is horizontally arranged so that the above mentioned dimensions, etc., are taken along the corresponding dimensions.

The load-bearing thin sheet metal profiles 202 can be arranged to run vertically in the wall element 201, such as all the way from floor to ceiling. The load-bearing thin sheet metal profiles 202 may also be arranged to be partially cast-in into the concrete slab 203 as described above along the entire length of the thin sheet metal profile 202 in question, such as from floor to ceiling.

The load-bearing thin sheet metal profiles 202 themselves are filled with high-performance concrete 211, such as the same high-performance concrete as the wall panel 203, and contain at least one rebar 212. The rebar 212 can have a dimension of at least 6 mm, and/or can run along the entire length of the load-bearing thin sheet metal profile 202. The embedding may have a cross-sectional area of at least 10 cm², such as at least 20 cm².

A second side of the wall element 201 consists of a second wall panel. This second wall board may comprise, such as being made of, one or more plasterboards 213 which in turn may be supported by non-load-bearing thin sheet metal studs 214. The load-bearing thin sheet metal studs 202 and the non-load-bearing thin sheet metal studs 214 can be "staggered" (of offset) in relation to each other along the horizontal length of the wall element 201, and can be positioned so that they are not in direct physical contact with each other. This prevents unwanted sound transmission between the first and second sides of the wall element 201, while limiting the total thickness of the wall element 201 by said "scissoring". By way of comparison, the apartment partitioning walls of the wooden modular building systems mentioned above have a total thickness of about 300 mm, while the wall according to figure 6 has a total thickness of just over 200 mm, which saves space.

In some embodiments, there is a distance between the load-bearing thin sheet metal profiles 202 and the second wall board (plasterboards 213) so that the load-bearing thin sheet metal profiles 202 and the second wall board are not in direct physical contact with each other. Correspondingly, the non-load-bearing thin sheet metal profiles 214 may be arranged at a distance from the concrete slab 203, so that the non-load-bearing thin sheet metal profiles 214 are not in direct physical contact with the concrete slab 203.

In some designs, the plasterboards 213 can be installed only on the construction site, avoiding transport damage to the fragile plasterboards 213 and allowing efficient use of the space inside the wall element 201 inside of the plasterboards 213 to be able to carry out various installations on the construction site, etc. To avoid drum noise between the wall panel 203 and the second wall panel 213, the space between the non-load-bearing thin sheet metal studs 214 can be filled with insulating material 214, such as mineral wool insulation.

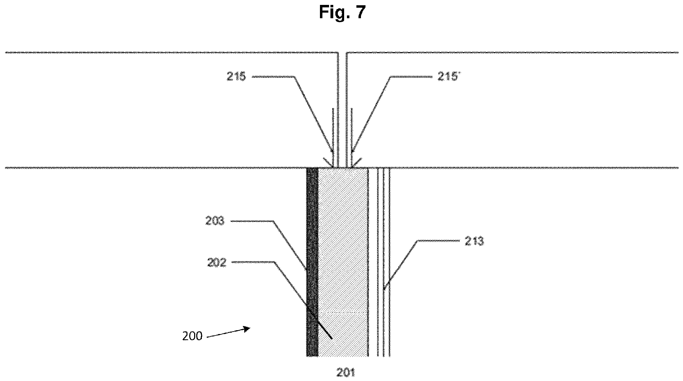

Figure 7 shows how a load 215 and 215' from the respective above-arranged floor on either side of wall element 201 are both applied to the load-bearing part of the wall element 201, namely on the load-bearing thin sheet metal profiles 202.

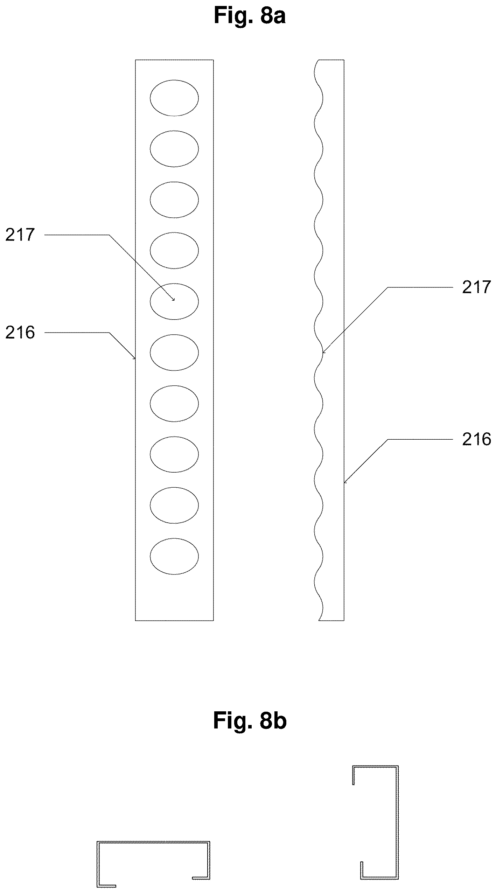

Figure 8a shows how an ordinary load-bearing thin sheet metal stud 216 tends to have local dents 27 when it is subjected to a vertical load that gives compressive stresses across the cross-sectional area of the profile. The dents 217 take on a sinusoidal shape with every other dent outwards and every other dent inwards. These local dents significantly reduce the load-bearing capacity of the profile. In terms of calculations, this is handled by using a so-called effective area, which can be significantly smaller than the actual cross-sectional area. The smaller the wall thickness of the sheet metal stud, the greater the reduction of the cross-sectional area and the smaller the load-bearing capacity of the stud.

By filling the sheet metal stud 202 with high-performance concrete 211 in accordance with the present solution, the local buckling 217 is prevented (Figure 8b). This is because the concrete prevents the sinusoidal wave from forming. This means that the entire cross-sectional area can be credited for vertical load pick-up. Furthermore, the concrete 211 itself, together with the reinforcement 212, means an additional load-absorbing capacity in addition to the thin sheet metal profile 2+2 itself. Theoretical calculations that have been certified through load tests of concrete-filled thin sheet metal studs show that the load-bearing capacity can be more than doubled by a solution of the present type. As an example, a thin sheet metal stud with a C-cross-section with a web of 120 mm and flanges of about 40 mm and with a wall thickness of 1.2 mm has a load-bearing capacity of about 45 kN at a wall height of 3 m. This requires that both flanges of the stud are anchored, for example by plasterboard, to prevent buckling in the weak direction of the stud (40 mm). The corresponding stud embodied in accordance with an exemplary form of the present solution, filled with high-performance concrete and reinforced with a 10 mm rebar, showed a load-bearing capacity of twice or 90 kN in trials. This without being prevented from cracking in its weak direction. If bending in the weak direction is prevented according to the present solution by composite action with the thin concrete slab 203, a load capacity of more than 200 kN can be achieved.

### Load-carrying exterior wall element

A part component of the present system consists of a load-bearing exterior wall 300. Such an exterior wall 300 may include one or more load-bearing exterior wall elements 301 of a type that will now be described. More specifically, such an exterior wall element 301 may consist of a load-bearing thin wall panel 303 made of high-performance concrete in composite action with one or more load-bearing thin sheet metal profiles 302.

The load-bearing sheet profiles 302 are slotted sheet profiles, that can be C-shaped wherein one flange is embedded in the concrete of the concrete slab in a way that can correspond to what has been described above in relation to sheet metal profiles 102 and 202. The thin sheet metal profiles 302 can also have other profiles, such as a closed profile. However, they are preferably not cast-in with concrete or fitted with rebar. The slittings, in the form of several holes in the web of the thin sheet metal studs 302, reduce the thermal bridges embodied by the thin sheet metal studs in the exterior walls, but at the same time mean that the load-bearing capacity of the thin sheet metal studs 302 is reduced. In this way, adequate low heat transfer is achieved through the exterior wall 301.

In order to also achieve sufficient load-bearing capacity, the thin sheet metal studs 302 are therefore supplemented with at least one additional thin sheet metal stud 302' per thin sheet metal stud 302. Each additional thin sheet metal stud 302' can consist of a stud with a smaller profile than the corresponding thin sheet metal stud 302, and for example have a C-profile or a closed profile. The thin sheet metal stud 302' is cast-in with high-performance concrete and equipped with at least one rebar 312 per thin sheet metal profile in a way can correspond to what has been said above regarding the thin sheet metal studs 202. The thin sheet metal studs 302 and 302' are statically connected to each other to achieve a composite action along their respective lengths. Such a connection may consist of bolted joints, a welding joint or other suitable technique and may run along the entire length of the thin sheet metal studs 302, 302' and 302' respectively, such as from floor to ceiling in relation to a floor in a building where the exterior wall element 301 forms part of an exterior wall 300.

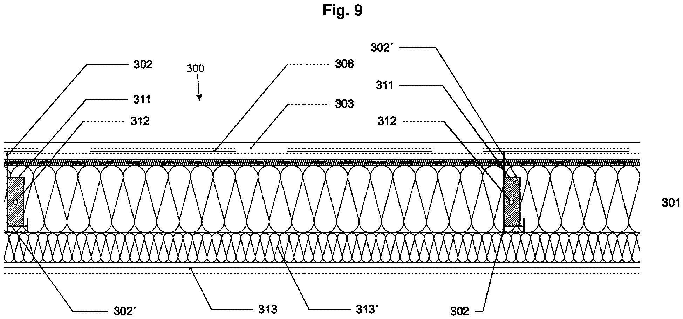

Figure 9 shows how the exterior wall element 301 on the outside is made up of the thin load-bearing wall panel 303 of high-performance concrete, where the outer flange of the slotted outer wall studs 302 of thin sheet metal is cast-in and anchored to a reinforcement mesh 306 embedded in the wall panel. The webs of the exterior wall studs 302 are slotted in a per se conventional manner, to reduce the thermal bridges of the thin sheet metal studs made of steel. In order to increase the load-bearing capacity of the exterior wall studs 302, which is limited by the slitting of their respective webs, the smaller thin sheet metal profile 302 of C-shape is fixed to the inner part of each exterior wall stud 302, filled with high-performance concrete 311 containing at least one rebar 312.

The inner side of the exterior wall element can consist of a non-load-bearing wall panel, for example including plasterboards 313 in turn being supported by non-load-bearing horizontal thin sheet metal profiles 313' having a Z-shape. The thin sheet metal profiles 313' can have a Z-shape seen in a horizontal cross-section or in a vertical cross-section taken perpendicularly to the main extension plane of the concrete slab 303, so that a horizontal distance is formed in the wall. The plasterboards 313 can be installed only at the construction site to avoid transport damage and to easily be able to use the space inside for various installations. The entire exterior wall can also be filled with insulating materials, such as mineral wool.

What has been said above regarding the concrete slab 103, the thin sheet metal profiles 102 and the reinforcement mesh 106 in the floor structure element 101, and how these parts relate to each other and to the floor structure 100 in general, can generally be applied in the same way to the corresponding concrete slab 303, thin sheet metal profiles 302 and reinforcement mesh 306 in the exterior wall element 301 and the exterior wall 300 in general, however with the insight that the exterior wall element 301 is vertically arranged while the floor structure element 101 is horizontally arranged in such a way that the above mentioned dimensions, etc., are taken along the corresponding dimensions.

### Load-bearing roof element

A part component of the present system consists of a load-bearing roof 400. Such a roof 400 can include one or more load-bearing roof elements 401 of a type that will now be described. More specifically, such a roof element 401 can consist of a load-bearing thin wall panel 403 made of high-performance concrete in composite action with one or more load-bearing thin sheet metal profiles 402.

The roof of a building, such as an apartment building, regardless of whether it is for a traditional concrete building or for an apartment building with a wooden frame, in many cases consists of raw tongue and groove wooden boards supported by wooden studs on an attic floor. This means that the roof structure above the attic represents a high fire load and a high fire risk. Innumerable, extensive and costly attic fires in Sweden confirm this.

In the case of attic fires in conventional concrete buildings, the rescue services usually let the attic burn off because the attic floor, made of concrete, hopefully prevents the attic fire from reaching further down in the building. This limits water damage from extinguishing. In the case of wooden buildings, on the other hand, there is a significantly greater risk that an attic fire will spread downwards in the building through the light and combustible attic floor. Letting the attic burn off without extinguishing is then normally not an option. On the other hand, this means that the water damage from extinguishing an attic fire in a wooden house is usually extensive, partly because an attic extends over several apartments and that extinguishing water usually penetrates into cavities etc., between all the module joints.

In order to generally limit the risk of extensive attic fires, there are requirements in the Swedish building regulations that the eaves must be tight and meet at least fire safety class El 30. This is to reduce the risk of flames coming out of the windows, in the event of a fire on the upper floor, quickly penetrating into the attic via the eaves. Furthermore, according to the above-mentioned building regulations, the attic must be divided into parts of a maximum of 400 m² for fire safety. There are also restrictions on the roof covering itself on the combustible tongue and groove boards. All these requirements entail a not insignificant cost. With the present solution, these costly measures are not needed because the attic and the roof can be designed to completely lack combustible components. An attic fire can therefore not occur, or spread, at all.

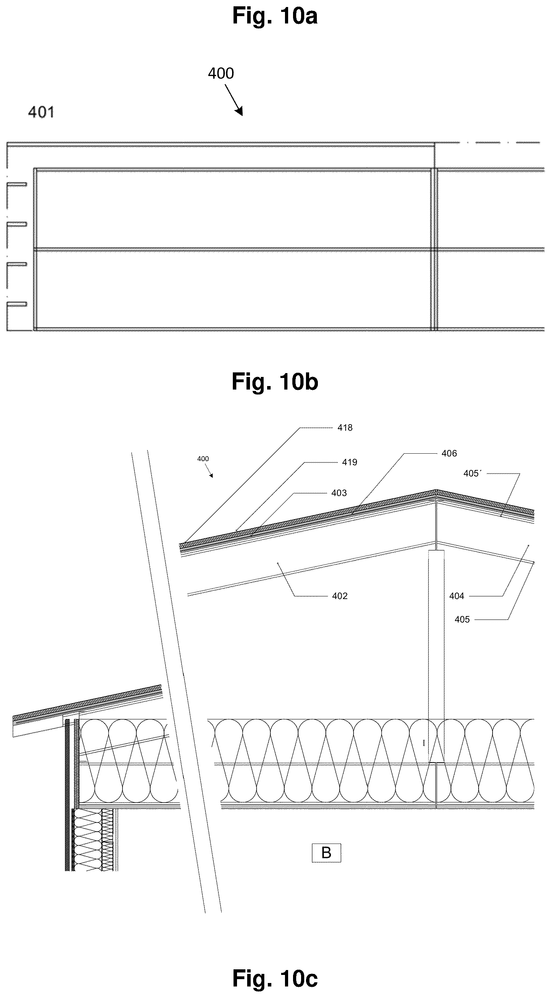

The present solution, in the form of an exterior roof element consisting of a thin concrete slab 403 of high-performance concrete in composite action with thin sheet metal profiles 402 of steel is described in more detail with reference to Figure 10, showing the exterior roof element 401.

Figures 10a-10c show how the exterior roof element 401 is made up of longitudinal load-bearing thin sheet metal profiles 402, which can have any profile, such as a closed profile, but which can also have a C-shape with a web 404, a lower flange 405 and an upper flange 405'. The upper flange is cast-in in a thin concrete slab 403 of high-performance concrete and is anchored to a reinforcement mesh 406 embedded in the concrete slab 403.

What has been said above regarding the concrete slab 103, the thin sheet metal profiles 102 and the reinforcement mesh 106 in the floor structure element 101, and how these parts relate to each other and to the floor structure 100 in general, can generally be applied in the corresponding manner to the corresponding concrete slab 403, thin sheet metal profiles 402 and reinforcement mesh 406 in the exterior roof element 401 and the exterior roof 400 in general, however, with the understanding that the exterior roof element 401 is arranged at an angle while the floor structure element 101 is horizontally arranged so that the above mentioned dimensions, etc., are taken along the corresponding dimensions.

On the upper side of the concrete slab 403, a thin stone wool board 418 can be cast in place already from the factory. The stone wool board 418 reduces the risk of condensation in the attic during rapid temperature changes outdoors, for example between day and night. On the roof covering 419 itself, which can be of any material, which is laid on top of the stone wool board 418, the fire technical restrictions that apply to roof coverings on conventional roofs made of combustible tongue and groove are not imposed.

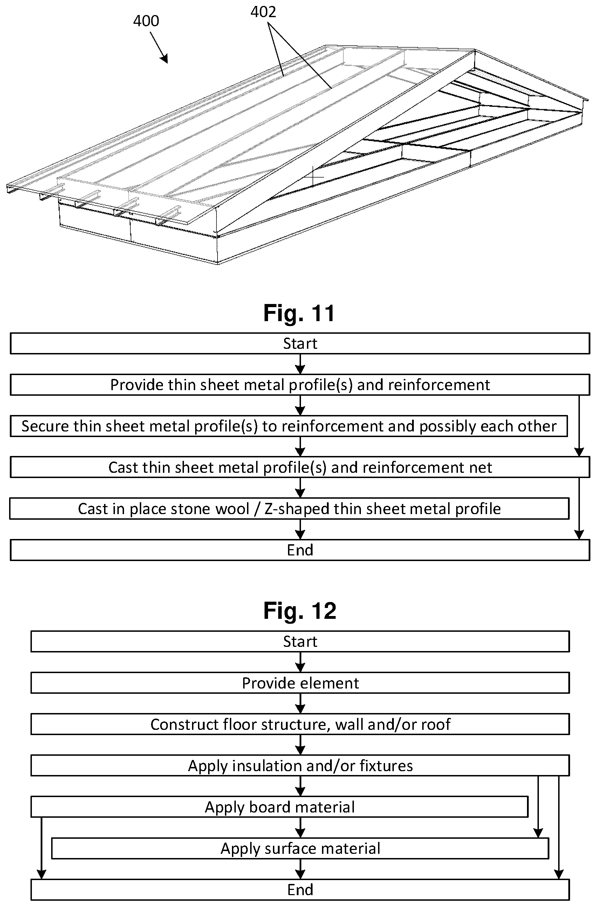

Figure 11 shows a method for making an element 101, 201, 301, 401 of any one of the types described above. Manufacturing can take place in a factory and/or at geographic distance from a construction site where elements 101, 201, 301, 401 are intended to be used for the construction of a building. Manufacturing can also take place more or less in advance of the actual construction/erection of the building.

In a first step, the method starts.

In a subsequent step, one or more load-bearing thin sheet metal profiles 102, 202, 302, 302', 402, and one or more reinforcement meshes 106, 206, 306, 406, are provided.

In a subsequent step, the load-bearing sheet profiles 102, 202, 302, 302', 402 are anchored to each other and/or to one or more reinforcement meshes 106, 206, 306, 406, to form an aggregate of one or more thin sheet metal profiles 102, 202, 302, 302', 402 and one or more reinforcement meshes 106, 206, 306, 406 of any one of the types described above. For example, one or more thin sheet metal profiles 102, 202, 302, 402 can be anchored to one or more reinforcement mesh 106, 206, 306, 406; and one or more thin sheet metal profiles 302' can be anchored to one or more thin sheet metal profiles 302.

In a subsequent step, the load-bearing thin sheet metal profiles 102, 202, 302, 402 are cast into a thin sheet 103, 203, 303, 403 of high-performance concrete cast to fully or partially enclose one or more reinforcement meshes 106, 206, 306, 406 and to completely enclose a flange 105', 205', 305', 405' of the one or more thin sheet metal profiles 102. 202, 302, 402. In this step, the thin sheet metal profiles 202, 302' can also be filled with high-performance concrete, if applicable. In the case of the exterior wall element 302, the thin sheet metal profiles 302' can also be connected to the thin sheet metal profiles 302.

In the same or a subsequent step, the stone wool board 418 can be cast in place, in the case of the roof element 401, or the thin sheet metal profiles 313' can be installed, in the case of the exterior wall element 301.

In a subsequent step, the method ends.

Figure 12 shows a method for constructing or erecting a building using several elements 101, 201, 301, 401 of one or more of the types described above. Elements 101, 201, 301, 401 may be manufactured according to the method illustrated in Figure 11.

In a first step, the method starts.

In a subsequent step, several of elements 101, 201, 301, 401 of said type are provided.

In a subsequent step, one or more floor structures 100 are constructed from several adjacent and joined floor structure elements 101 of said type; one or more load-bearing interior walls 200 of several arranged and joined interior wall elements 201 of said type; one or more load-bearing exterior walls 300 of several adjacent and joined exterior wall elements 301 of said type; and/or one or more exterior roofs of several adjacent and joined exterior roof elements 401 of said type.

In a subsequent step, insulation can be applied, if applicable, to fill the floor structure 100, the wall 200, 300 or the exterior roof 400. This step can also include installing fixtures or infrastructure components for e.g. electricity, water, sewage, communication or ventilation.

In a subsequent step, sheet or board material, such as plaster 109, 213, 313, can be applied as described above.

In a subsequent step, a desired surface material, such as floor covering, panels, paint or wallpaper, can be applied.

In a subsequent step, the method ends.

Above, preferred embodiments have been described. However, it is apparent to the skilled person that these embodiments can be modified in many ways without departing from the basic ideas underlying the present invention.

For example, each floor structure element 101, wall element 201 and 301, and each roof element 401, may comprise additional elements than those described above, however preferably exclusively non-combustible components.

A method for manufacturing a floor structure element 101, 201, 301, 401, a floor structure 100, a wall, 200, 300 or a roof 400 may involve additional steps, such as factory installation of fixtures, mains, water, or sewerage, or installation of interiorly covering coatings. The same applies to a method for constructing a building using elements 101, 201, 301 and 401.

Everything that has been said above regarding the various building elements 101, 201, 301, 401 is applicable to the corresponding floor structure 100, wall 200, 300 or roof 400 and vice versa. In addition, everything that has been said above with regard to the various methods applies to the corresponding building elements 101, 201, 301, 401 and vice versa.

The invention is thus not limited to the described embodiments, which should be seen as examples. Instead, it is the patent claims that specify the scope of protection.

## Claims

1. Building element (101,401), arranged to, in an installation orientation, constitute a part of a floor structure (100) or a roof (400) in a building, whereby the building element (101,401) comprises
at least one thin sheet metal profile (102,402) having a length direction, whereby the thin sheet metal profile (102,402) comprises a first flange (105, 405) and a web (104,404), whereby the first flange (105,405) is rigidly connected to a first longitudinal edge of the web (104, 404) and runs along the length of the thin sheet metal profile (102,402);
a cast concrete slab (103,403) having a plane of extension which is parallel to the length direction of the thin sheet metal profile (102,402), whereby the concrete slab (103, 403) has a thickness, perpendicularly to said plane of extension, of at the most 40 mm and is manufactured from concrete which in hardened condition has a compressive strength of at least 80 Mpa; and
a reinforcement (106,406), cast into the concrete slab, whereby
a second longitudinal edge of the web (104,404), being opposite to the first longitudinal edge, is cast into the concrete slab (103,403) along the length of the thin sheet metal profile (102,402) to achieve a composite action between the concrete slab (103,403) and the thin sheet metal profile (102,402), and whereby
the first flange (105,405) is completely arranged outside of the concrete slab (103,403), and whereby
the surface area relations between the concrete slab (103,403) and the thin sheet metal profile (102,402) are such so that a part of the cross-section of the thin sheet metal profile (102;4029 which is parallel to the web (104,404) constituting at least 90% of the thin sheet metal profile (102,402) as counted from the first flange (105,405) in a direction towards the second flange (105',405') is subjected to tensile stress (10) when the building element (101,401) is loaded in a direction perpendicularly to the plane of extension of the concrete slab (103,403) in a direction from the second flange (105',405') towards the first flange (105,405).

2. Building element (101,401) according to claim 1, whereby
the concrete slab (103,403) is manufactured from high performance concrete.

3. Building element (101,401) according to claim 1 or 2, whereby
the thin sheet metal profile (102,402) has a material thickness of at the most 3.0 mm.

4. Building element (101,401) according to any preceding claim, whereby
the thin sheet metal profile (102,402) further comprises a second flange (105',405'), whereby the second flange (105',405') is rigidly connected to an upper edge of the web (104,404) and runs along length of the thin sheet metal profile (102,402), whereby
the second flange (105',405') is cast into the concrete slab (103,403), and whereby
the composite action between the thin sheet metal profile (102,402) and the concrete slab (103,403) is achieved by the second flange (105',405') being secured to the reinforcement (106,406) via a connection being contained inside the concrete slab (103,403).

5. Building element (101,401) according to any preceding claim, whereby
the thin sheet metal profile (102,402) has a C profile.

6. Building element (101,401) according to any preceding claim, comprising
several parallel and separate thin sheet metal profiles (102,402), in composite action with one and the same concrete slab (103,403).

7. Building element (101,401) according to any preceding claim, comprising
two thin sheet metal profiles (102,402) arranged in direct connection to each other so that a respective external surface of their respective web (104,404) abuts directly against each other.

8. Building element (101,401) according to claim 7, comprising
a thin sheet metal profile (102,402) arranged at and along an edge of the concrete slab (103,403), the thin sheet metal profile (102,402) having said external surface of its web (104,404) exposed so that it can abut directly against a corresponding this sheet metal profile (102,402) of an adjacent building element (101,401).

9. Building element (101,401) according to any preceding claim, whereby
the length direction of the thin sheet metal profile (102,402) has a non-zero horizontal component in said installation orientation, and whereby
the first flange (105,405) is arranged under the concrete slab (103,403) in said installation orientation.

10. Building element (401) according to claim 10, whereby
the building element (401) is a roof element (401), whereby
the building element (401) has a non-combustible stone wool board as a substrate for a roof covering, the stone wool board being cast-in at the factory at a side of the concrete slab (403) facing away from the thin sheet metal profile (402).

11. Structural part (100,400) of a building, comprising
several building elements (101,401) according any preceding claim, installed side by side and side edge to side edge to form the structural part (100,400).

12. Building, comprising
a structural part (100,400) according to claim 11.

13. Method for manufacturing a building element (101,401) according any one o fclaims 1-11, comprising the steps
providing at least one thin sheet metal profile (102,402) having a length direction, whereby the thin sheet metal profile (102,402) comprises a first flange (105,405) and a web (104,404), whereby the first flange (105,405) is rigidly connected to a first longitudinal edge of the web (104,404) and runs along the length of the thin sheet metal profile (102,402);
providing a reinforcement (106,406); and
cast a concrete slab (103,403), having a plane of extension which is parallel to the length direction of the thin sheet metal profile (102,402), whereby
the reinforcement (106,406) is cast into the concrete slab,
a second, longitudinal edge being opposite to the first longitudinal edge, of the web (104,404) is also cast into the concrete slab (103,403) along the length of the thin sheet metal profile (102,402) to achieve composite action between the concrete slab (103,403) and the thin sheet metal profile (102,402), and
the first flange (105,405) is not cast into the concrete slab (103,403) but is arranged outside of the concrete slab (103,403).

14. Method for manufacturing a structural part (100,400) according to claim 11, comprising the steps
providing several building elements (101,401) according to any one of claims 1-10;
constructing the structural part (100,400) by installing said several building elements (101,401) next to each other to form part of the structural part (100,400); and
as a respective part of the structural part (100,400), apply one or more of insulation;
fixtures for electricity, water, sewer, ventilation and/or communications;
sheet materials, such as plasterboards; and
surface-covering material.

15. Method according to claim 14, whereby the structural part (101) is a floor structure ,and wherein the method further comprises the step
installing a ceiling beneath the floor structure, comprising spring-loaded suspended plasterboards.
